# EUROPEAN PATENT SPECIFICATION

(11) **EP 1 556 452 B1**
(45) Date of publication and mention of the grant of the patent: **02.07.2008**
(21) Application number: 03779813.9
(22) Date of filing: 27.10.2003
(51) Int. Cl.: C09D 183/04, C09D 183/08, C09D 4/00

(54) **PROCESS AND COMPOSITION FOR COATING**
VERFAHREN UND ZUSAMMENSETZUNG ZUR BESCHICHTUNG
PROCEDE ET COMPOSITION DE REVETEMENT

(30) Priority: 28.10.2002 DE 10250281
(43) Date of publication of application: 27.07.2005
(73) Proprietor: Nanogate AG, 66121 Saarbrücken (DE)
(72) Inventor: JONSCHKER, Gerhard, 66583 Spiesen-Elversberg (DE); KRAKEHL, Joachim, 66117 Saarbrücken (DE); ZINDEL, Oliver, 63303 Dreieich (DE); SIEVERS, Heiko, 67663 Kaiserslautern (DE)
(74) Representative: Jönsson, Hans-Peter
(86) International application number: PCT/EP2003/011911
(87) International publication number: WO 2004/037936

(56) References cited:
- EP-A- 0 571 896
- DE-A- 10 060 304
- DE-A- 19 900 492
- GB-A- 856 522
- US-A- 5 464 154
- US-A- 6 045 056
- DATABASE WPI Week 199028 Derwent Publications Ltd., London, GB; AN 1990-213869 XP002272284 "Formation of organic thin film on metal plate - by treating plate with unsatd. coupling agent, drying, coating with polymerisable monomer, etc." & JP 02 144177 A (NISSHIN STEEL CO LTD), 1 June 1990 (1990-06-01)
- DATABASE WPI Week 199419 Derwent Publications Ltd., London, GB; AN 1994-158067 XP002272285 DZHAMANBAEV SH D; KURMANKULOV SH D; TEKENOV ZH T: "Application of protective coating on to coal surface - by spraying with aq. emulsion of fat residue or mixt. of vat residue synthetic fatty acids with specified chloride or hydroxide soln." & SU 1 799 904 A ((AUTE-R) AS UKR TECH HEAT PHYS INST), 7 March 1993 (1993-03-07)

## Description

The present invention relates to a process and composition for coating of substrates with a hydrophobic and/or oleophobic surface.

Various coatings are known that add hydrophobic and/or oleophobic properties to substrates. Such coatings should preferably be abrasion resistant, longterm stable, and easy to apply.

The stability is typically accomplished by heavily cross-linking the substrate and the molecules of the coating material. According to current knowledge, such cross-linking aids in the stability of the films, even when such films are comparatively thin.

To accomplish cost effective coating processes, the process step of the coating process should allow for easy handling. Typically, the coating material is brought into contact with the substrate for example by polishing, wiping, spraying or rinsing. After application excess material has to be removed.

DE 100 60 304 A1 describes a process for the spray coating of micro lenses. Using various alkoxy silanes as a spray component a droplet size of the spray in a range of 20 to 200 µm is achieved by using an appropriate dosing system. After spraying the coated layer is hardened by using either thermal energy, micro waves and/or UV radiation.

EP 0 571 896 A2 describes a method of manufacturing a chemically absorbed film on a surface with active hydroxyl groups. Either chlorosilane-based or thiol-based silicon compounds are being used in a first step which serves to bind the silicon atoms to the active hydroxyl groups in a covalent fashion. In a second step excessive silicon chlorine or silicon sulphur bonds are used to link the silicon atoms among each other: The addition of water serves to furnish additional silicon-OH-bonds which condense under the formation of additional silicon-oxygen-silicon bonds. Due to the reactivity of the silicon-based starting materials the contacting process always has to be conducted in a dry atmosphere.

JP 02144177 A describes the formation of an organic film on a metallic plate. A metallic plate is first treated with a silicon or titanium-based coupling agent incorporating an unsaturated double bond. After linking the hydrolysable groups of the coupling agent to each other and to the hydroxyl groups on the surface of the metal, a monomer is applied to this cross-linked layer and irradiated with electron beams. Since the unsaturated double bond of the coupling agent is also incorporated into this organic film it is tightly stuck to the surface of this metal.

DE 199 00 492 A1 describes the formation of permanently hydrophilic layers on polymeric substrates. The polymeric substrate is first treated with a hydrolysable silane leaving a structured surface after drying. After treatment with a hydrophilic compound the permanent hydrophilic layer is obtained.

US 6,045,056 describes a method and an apparatus for efficiently applying liquid coatings to a work piece. This optimised spray device allows for the production of droplets with a low diameter in a range of 16 to 86 µm which enhances the uniformity of the applied coating.

Therefore, the task of the present invention is the provision of a cost effective process for coating and the required composition.

In a first embodiment of the present invention, the problem is solved by a process for the generation of an oleophobic and/or hydrophobic coating on a substrate by spraying a coating material **onto that substrate,** characterized in that a solution of a coating material containing less than 10 % by weight of at least a silane in a carrier with a droplet size of smaller than 100 µm diameter in average when leaving the spray nozzle is sprayed on**to the substrate.**

The term "silane" used according to the present invention does not encompass a single silane only, but furthermore relates to mixtures of silanes also.

The term "carrier" according to the present invention relates to a liquid, having a defined viscosity at ambient temperature and pressure. The viscosity is measured with a rotational viscosimeter (Brookfield rheometer according to DIN 53018 part 1 and 2, DIN 53019-1) coaxial cylinder system. The vapor pressure of the carrier at ambient temperature and pressure preferably should be at least the one of water (2.3 kPa) or higher. The evaporation number of the carrier preferably should be less than that of water (80) in comparison to that of diethylether (1).

Preferably, the distance between nozzle and article is adjusted that at least 30%, particularly at least 50%, of the solvent of the droplets evaporates before the droplets impinge on the article.

For good adhesion performance, it is best for the silane to contain at least one reactive group for linking it with the substrate, in particular mineral substrate, particularly a ceramic and/or a siliceous substrate, preferably with siliceous glasses, sanitary ware, tiles, where said reactive group of the silane is not directly connected to an atom that is fluorinated.

For the coating resulting from said process to exhibit good hydrophobicity, the silane is an alkylsilane conforming to the general formula (I)

SiR¹R²R³R⁴ (I)

wherein R¹ is a linear or branched alkyl group each containing 1 to 18 carbon atoms, 3 to 37 hydrogen atoms, 3 to 33 fluorine atoms, 0 to 6 oxygen atoms an 0 to 5 nitrogen atoms and where R², R³, R⁴ are each selected from linear or branched alkoxy groups each containing 1 to 4 carbon atoms, and that is present in a concentration of up to 10 % by weight. Such silanes are in particular disclosed in EP 0587667 B1.

Silanes as described in this invention include non-fluorinated silanes, such as
CH₃Si(OC₂H₅)₃, C₂H₅Si(OC₂H₅)₃, CH₃Si(OCH₃)₃, C₆H₅Si(OCH₃)₃,
C₆H₅Si(OC₂H₅)₃,
CH₂=CHSi(OOCCH₃)₃, CH₂=CHSi(OCH₃)₃, CH₂=CHSi(OC₂H₅)₃,
CH₂=CHSi(OC₂H₄OCH₃)₃, CH₂=CHCH₂Si(OCH₃)₃,
CH₂=CHCH₂Si(OC₂H₅)₃, CH₂=CHCH₂Si(OOCCH₃)₃,
CH₂=C(CH₃)COOC₃H₇Si(OCH₃)₃, CH₂=C(CH₃)COOC₃H₇Si(OC₂H₅)₃,
(C₂H₅O)₃SiC₆H₄NH₂,
(C₂H₅O)₃SiC₃H₆NH₂,
(C₂H₅O)₃SiC₃H₆CN, (CH₃O)₃SiC₄H₈SH, (CH₃O)₃SiC₆H₁₂SH,
(CH₃O)₃SiC₃H₆SH, (C₂H₅O)₃SiC₃H₆SH,
(CH₃O)₃SiC₃H₆NHC₂H₄NH₂, (CH₃O)₃SiC₃H₆NHC₂H₄NHC₂H₄NH₂,

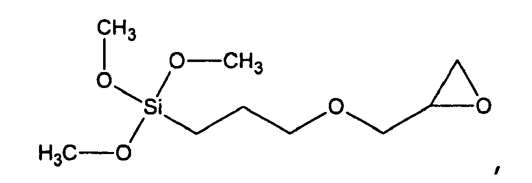

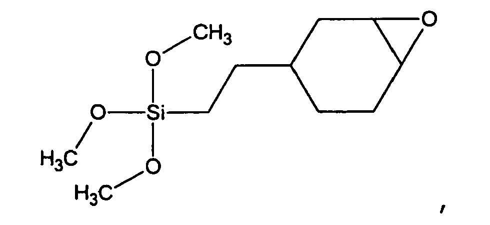

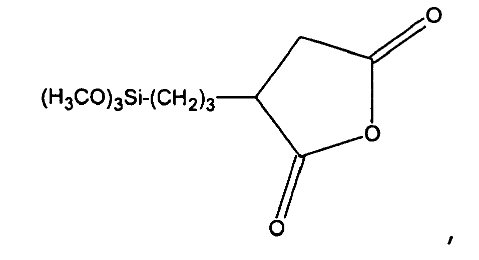

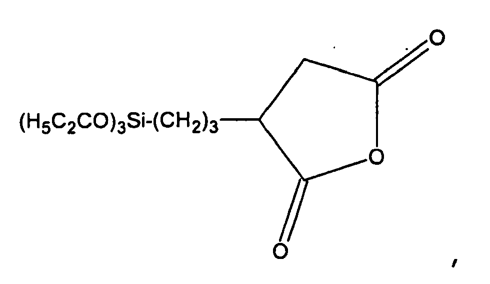

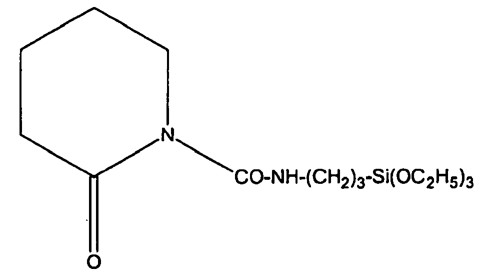

Said silanes may be prepared according to known methods; cf. W. Noll "Chemie und Technologie der Silicone", Verlag Chemie GmbH, Weinheim/Bergstrasse (1968).
Silanes as described in this invention can also be fluorinated, such as
CF₃CH₂CH₂SiY₃
C₂F₅CH₂CH₂SiY₃
C₄F₉CH₂CH₂SiY₃
n-C₆F₁₃CH₂CH₂SiY₃
n-C₈F₁₇CH₂CH₂SiY₃
n-C₁₀F₂₁CH₂CH₂SiY₃
(Y = OCH₃, OC₂H₅)

Essential is the cognition that particularly good coatings can be obtained, if silanes, in particular alkylsilanes, are used in the coating in low concentration, but with a sufficiently low viscosity that allows for a very fine spray. It was found that despite the low concentration of silanes, nevertheless very stable, i.e. abrasion resistant, coatings can be obtained. The reasons for this are not completely understood yet, but the following mechanism might be responsible: in the very fine droplets of the spray, the silanes appear to be organized like micelles during the flight of the droplet from the nozzle to the article. At the same time, the carrier can evaporate efficiently due to the small size of the droplets. Despite of the high dilution of the composition when leaving the nozzle, a comparatively concentrated droplet is impinging on the surface.

It is assumed that said micellar structure is destroyed on the surface, whereby a cross-linking can occur shortly due to the concentration during the flight of the droplet. The very fine application favors a formation of a uniform coating. The concentration of the droplet during the flight provides a fast formation of the actual coating with the additives. Since there is no carrier in large excess that would have to evaporate from the surface, practically no veil formation or similar artifacts can be observed. In fact, it can be assumed that the micellar structured silanes remain at least partially connected or structured upon impinging on the substrate.

In order to achieve the aforementioned concentration of the carrier including the silane during the flight of the droplet from leaving the nozzle to impinging on the surface, said carrier preferably has a viscosity in the range from 0.2 to 15 mPa·s, such that a spray of the coating material contains droplets smaller than or up to 100 µm average droplet-size, particularly up to 75 µm, preferably up to 50 µm average droplet-size. The droplet size, being in particular dependent on the viscosity and other physical properties of the composition sprayed on the article, is therefore dependent on the spray nozzle. Commonly available nozzles are known providing such desired droplet sizes.

To achieve the best visual appearance of the film and possibly even to make a cleaning step after coating redundant, the article is preferably sprayed in a first track covering a part of the substrate only, then drying said track, followed by spraying a further track of the substrate after a significant amount, in particular at least 70 % of the carrier remaining on the surface of the first track has evaporated.

Because of the high market potential and the size of the market for metals, tiles, siliceous glass, ceramic, and/or polymer surfaces, it is advantageously to use said process for these applications.

Preferably, the coating composition is coated in tracks where the beginning of each track always is on the same edge of the article to achieve optimal uniformity of the coating.

**A** composition for providing substrates with a hydrophobic and/or oleophobic surface, contains less than 10 % by weight of at least a silane in a liquid carrier having a viscosity in the range from 0.2 to 15 mPa·s. Said composition contains an alkylsilane conforming to the general formula (I)

SiR¹R²R³R⁴ (I)

wherein R¹ is a linear or branched alkyl group each containing 1 to 18 carbon atoms, 3 to 37 hydrogen atoms, 3 to 33 fluorine atoms, 0 to 6 oxygen atoms and 0 to 5 nitrogen atoms, and where R²,R³,R⁴ are each selected from linear or branched alkoxy groups each containing 1 to 4 carbon atoms.

To achieve sufficient hydrophobicity, the silane according to the present invention is of particular advantage, if it is conforming to the general formula I being a fluorinated alkylsilane, particularly a perfluorinated alkylsilane, where R¹ is a linear or branched alkyl group containing from 1 to 18 carbon atoms, 3 to 37 hydrogen atoms, 3 to 33 fluorine atoms, 0 to 6 oxygen atoms, and 0 to 5 nitrogen atoms and where R²,R³,R⁴ each are selected from the group containing chlorine or linear or branched alkyl groups each containing 1 to 4 carbon atoms or linear or branched alkoxy groups each containing 1 to 4 carbon atoms. The fluorinated or perfluorinated residue preferably e. g. should contain a spacer group, e.g. -(CH₂)₂- in connection to the Si-group.

The invention is particularly suitable, if the coating composition comprises silanes, which in combination with a carrier lead to autophobic behavior. In this text "autophobic" means the effect that liquids agglomerate on surfaces to form droplets by themselves. This effect particularly leads to good results, when the droplets impinge on the article, after they have been concentrated during their flight.

Particularly suitable as carrier is a solvent or a mixture of solvents for said silanes or a dilution of dissolved silanes such like water and/or alcohols, particularly lower molecular weight alcohols such as methanol, ethanol, and propanol; particularly isopropanol is suitable. The advantage of said solvents is that on the one hand they exhibit a low viscosity and on the other hand they possess sufficiently high vapor pressure at room temperature or slightly elevated temperatures. Additionally, the aforementioned substances are readily used in technical processes without compromising the environment.

Said composition may contain additional additives, namely metal salts, metal organic compositions, nano particles, surfactants, silicones, colorants, catalysts, conserving agents, perfumes and/or salts of organic bases.

Preferably, a surfactant is added to the coating composition for reducing the surface tension of the carrier. Also, catalysts can be added, which can affect a cross-linking of the silanes with each other in the carrier and/or provide a linking of the silanes with the substrate.

Furthermore, the catalyst is added to the coating composition and initiated after application of the coating material. This way it can be insured that the silanes comprised in the coating composition react only, after the coating was applied by said process.

The catalysts can be used in an amount such that a sufficiently long storage of the coating material is possible, particularly storage of at least one week. Typical storage times might be several months as well. Usage of low amounts of catalysts is possible, because the amount of catalyst is concentrated in the coating material during flight of droplets. Catalysts encompass in particular non-volatile acids, as they are known, and in particular UV activated catalysts as described in EP 0 587 667 B1.

Typically, the vapor pressure of the carrier is selected such that during spray of the coating material the fine droplets are concentrated. The extend of the concentration is such that directly after impinging of the droplets on the surface, the cross-linking is catalyzable and/or the catalytic cross-linking starts by itself.

The concentration of the silanes can be lower than the previously mentioned 10 % by weight in the preferred embodiment. It was found that even with low concentration of silanes of below 5 % by weight, even below 2 % by weight, satisfactory coatings can be obtained. It should be noted that the concentration of the droplets to achieve the necessary concentration of the silanes in the composition is dependent on how small the droplets actually can be produced and can be adjusted by the distance from the nozzle to the article, the temperature, preferably room temperature, and the atmospheric pressure.

It should be understood that this description does not preclude chemical interactions among the components listed, but instead describes the components of a composition according to the invention in the form in which they are generally used as ingredients to prepare such a composition.

The invention is described by the following examples:

### Examples:

### Example 1:

60 g isopropanol, 4 g isopropoxyethanol, 2 g Dynasilan^{®}F8261 (Degussa), 3 g octyltriethoxysilane and 1 g dimethyldiethoxysilane were added to a reaction vessel and stirred briefly. The mixture was stirred for 15 min. 0.1 g of sulfuric acid, which was dissolved in 29.9 g demineralized water, was then slowly added and the reaction mixture was stirred for 30 min.

### Example 2:

59.97 g isopropanol, 5.5 g isopropoxyethanol, 1.5 g Dynasilan^{®}F8261 (Degussa), 2 g octyltrimethoxysilane and 1 g dimethoxysilane were added to a reaction vessel and stirred briefly. After addition of 0.03 g fatty alcohol (C₈ to C₁₀) glycoside (Sapetin^{®}-N) (surfactant) the mixture was stirred for 15 min. 0.1 g of sulfuric acid, dissolved in 29.9 g water, were then slowly added and the reaction mixture was stirred for 30 min.

### Example 3:

64 g isopropanol, 2.78 g isopropoxyethanol and 1 g heptadecafluoro-decyltrimethoxysilane (Shin Etsu) were added to a reaction vessel and stirred briefly. The mixture was stirred for 15 min. 0.2 g sulfuric acid was slowly added to the mixture.

### Example 4:

10 x 10 cm glass substrates were cleaned using a commercially available scouring milk and isopropanol before coating. At room temperature, said glass substrates were coated 4 times using spray coating with parameters including 2.5 bar pressure and 40 cm distance from nozzle to substrate. The coating was performed on the fireside of the substrates. The equipment for spray coating was a SATAJET^{®} 90RP nozzle MSB.

The results obtained are given in the following table:

**Table:**

| **Composition** | **Visual Appearance** | **Hydrophobicity** |
|---|---|---|
| Example 1 | practically no veil | 95 |
| Example 2 | practically no veil | 98 |
| Example 3 | practically no veil | 98 |

Visual appearance was determined by the human eye. Key criteria include detection of artifacts (e.g. veil formation, blooming, ...), transparency, and clarity.

Hydrophobicity was evaluated by contact angle measurement in ° against demineralized water in air. Unless otherwise stated, said contact angle is determined by dynamic advancing contact angle measurements using a Krüss^{®} instrument.

## Claims

1. A process for the generation of a uniform oleophobic and/or hydrophobic coating on a substrate by spraying a coating material onto a substrate, **characterized in that** said coating material containing a catalyst and at least one silane in an amount of less than 10 % by weight in a liquid carrier and that it exhibits a droplet size of up to 100 µm diameter in average when leaving the spray nozzle during spray-coating and that siliceous glass and/or ceramic substrates are coated and that that said silane is an alkylsilane conforming to the general formula (I)
SiR¹R²R³R⁴ (I)
wherein R¹ is a linear or branched alkyl group each containing 1 to 18 carbon atoms, 3 to 37 hydrogen atoms, 3 to 33 fluorine atoms, 0 to 6 oxygen atoms and 0 to 5 nitrogen atoms, and where R²,R³,R⁴ are each selected from linear or branched alkoxy groups each containing 1 to 4 carbon atoms, wherein said catalyst is initiated after application of the coating material.

2. A process according to claim 1, **characterized in that** said silane contains at least one reactive group for linking it with a mineral substrate, particularly a ceramic and/or a siliceous substrate, particularly with siliceous glasses, sanitary ware, tiles, where said reactive group of the silane is not directly connected to an atom that is fluorinated.

3. The process according to any of the claims 1 or 2, **characterized by** using a liquid carrier being a solvent and/or dilution of solvent, in particular having a viscosity in the range from 0.2 to 15 mPa·**s**.

4. The process according to any of the claims 1 to 3, **characterized by** using a spray nozzle providing a droplet size up to 75 µm average droplet size, particularly up to 50 µm, in particular up to 15 µm.

5. The process according to any of the claims 1 to 4, **characterized in that** the substrate is sprayed in a first track covering a part of the substrate only, then drying said track, followed by spraying a further track of the substrate after at least 70 % of said carrier of the first track has evaporated.

6. The process according to one of claims 1 to 5, **characterized in that** the coating material is coated in tracks and that the beginning of each track always is on the same edge of the article.

## Patentansprüche

1. Verfahren zur Erzeugung einer gleichmäßigen oleophoben und/oder hydrophoben Beschichtung auf einem Substrat durch Sprühen eines Beschichtungsmaterials auf ein Substrat, **dadurch gekennzeichnet, dass** das Beschichtungsmaterial einen Katalysator und wenigstens ein Silan in einer Menge von weniger als 10 Gew.-% in einem flüssigen Träger enthält und dass es eine Tröpfchengröße von im Mittel bis zu 100 µm Durchmesser aufweist, wenn es die Sprühdüse während der Sprühauftragung verlässt, und dass silikatische Glas- und/oder Keramiksubstrate beschichtet werden und dass das Silan ein Alkylsilan ist, das der allgemeinen Formel (I) entspricht:
SiR¹R²R³R⁴ (I)
wobei R¹ eine lineare oder verzweigte Alkylgruppe ist, die jeweils 1 bis 18 Kohlenstoffatome, 3 bis 37 Wasserstoffatome, 3 bis 33 Fluoratome, 0 bis 6 Sauerstoffatome und 0 bis 5 Stickstoffatome enthält, und wobei R², R³ und R⁴ jeweils aus linearen oder verzweigten Alkoxygruppen ausgewählt sind, die jeweils 1 bis 4 Kohlenstoffatome enthalten, wobei der Katalysator nach der Auftragung des Beschichtungsmaterials gezündet wird.

2. Verfahren gemäß Anspruch 1, **dadurch gekennzeichnet, dass** das Silan wenigstens eine reaktive Gruppe enthält, um es mit einem mineralischen Substrat zu verknüpfen, insbesondere einem Keramik- und/oder silikatischen Substrat, insbesondere mit Silikatgläsern, Sanitärkeramik, Fliesen, wobei die reaktive Gruppe des Silans nicht direkt mit einem fluorierten Atom verbunden ist.

3. Verfahren gemäß einem der Ansprüche 1 oder 2, **dadurch gekennzeichnet, dass** ein flüssiger Träger verwendet wird, bei dem es sich um ein Lösungsmittel und/oder eine Lösungsmittelverdünnung handelt, insbesondere mit einer Viskosität im Bereich von 0,2 bis 15 mPa·s.

4. Verfahren gemäß einem der Ansprüche 1 bis 3, **dadurch gekennzeichnet, dass** eine Sprühdüse verwendet wird, die eine Tröpfchengröße von im Mittel bis zu 75 µm, insbesondere bis zu 50 µm, insbesondere bis zu 15 µm, liefert.

5. Verfahren gemäß einem der Ansprüche 1 bis 4, **dadurch gekennzeichnet, dass** das Substrat in einer ersten Spur besprüht wird, die nur einen Teil des Substrats bedeckt, dann die Spur getrocknet wird und anschließend eine weitere Spur des Substrats besprüht wird, nachdem wenigstens 70% des Trägers aus der ersten Spur verdampft sind.

6. Verfahren gemäß einem der Ansprüche 1 bis 5, **dadurch gekennzeichnet, dass** das Beschichtungsmaterial in Spuren aufgetragen wird und dass sich der Anfang jeder Spur stets an demselben Rand des Artikels befindet.

## Revendications

1. Procédé pour la production d'un revêtement oléophobique et/ou hydrophobique uniforme sur un substrat par projection d'un matériau de revêtement sur un substrat, **caractérisé en ce que** ledit matériau de revêtement contient un catalyseur et au moins un silane dans une quantité de moins de 10 % en poids dans un véhicule liquide, et qu'il présente une taille des gouttes allant jusqu'à 100 µm en diamètre au moyen quand il sort de la buse de projection pendant le revêtement par projection, et que des substrats en verre siliceux et/ou céramiques sont revêtis, et que ledit silane est un alkylsilane qui correspond à la formule générale (I):
SiR¹R²-R³R⁴ (I)
dans laquelle R¹ est un groupement alkyl linéaire ou ramifié chacun contenant de 1 à 18 atomes de carbone, de 3 à 37 atomes d'hydrogène, de 3 à 33 atomes de fluor, de 0 à 6 atomes d'oxygène et de 0 à 5 atomes de nitrogène, et dans laquelle R², R³ et R⁴ sont chacun choisis parmi les groupements alkoxy linéaires ou ramifiés chacun contenant de 1 à 4 atomes de carbone, ledit catalyseur étant amorcé après l'application dudit matériau de revêtement.

2. Procédé selon la revendication 1, **caractérisé en ce que** ledit silane contient au moins un groupement réactif pour le lier à un substrat minéral, notamment un substrat céramique et/ou siliceux, notamment à des verres siliceux, céramiques sanitaires, carreaux, dans lequel ledit groupement réactif du silane n'est pas lié directement à un atome fluoré.

3. Procédé selon l'une quelconque des revendications 1 ou 2, **caractérisé en ce que** l'on utilise un véhicule liquide qui est un solvant et/ou une dilution de solvant, notamment ayant une viscosité comprise dans la gamme allant de 0,2 à 15 mPa·s.

4. Procédé selon l'une quelconque des revendications 1 à 3, **caractérisé en ce que** l'on utilise une buse de projection fournissant une taille des gouttes allant jusqu'à 75 µm au moyen, notamment allant jusqu'à 50 µm, notamment jusqu'à 15 µm.

5. Procédé selon l'une quelconque des revendications 1 à 4, **caractérisé en ce que** la projection sur ledit substrat est effectuée dans une première trace couvrant une partie du substrat seulement, ensuite ladite trace est séchée, et puis la projection est effectuée sur une autre trace du substrat après qu'au moins 70 % dudit véhicule de la première trace sont évaporés.

6. Procédé selon l'une quelconque des revendications 1 à 5, **caractérisé en ce que** le matériau de revêtement est appliqué en traces et que le début de chaque trace est toujours sur le même bord de l'article.
